# EUROPEAN PATENT APPLICATION

(11) **EP 1 059 462 A1**
(43) Date of publication of application: **13.12.2000**
(21) Application number: 99120611.1
(22) Date of filing: 18.10.1999
(51) Int. Cl.: F16C 1/20

(54) **Flexible push-pull drive device**

(30) Priority: 08.06.1999 IT MI991268
(71) Applicant: Migliori, Luciano, 20090 Milano 2, Segrate (MI) (IT)
(72) Inventor: Migliori, Luciano, 20090 Milano 2, Segrate (MI) (IT)
(74) Representative: Coloberti, Luigi

(57) **Abstract**

A flexible push-pull drive device for mechanical power transmissions; the device comprises a plurality of bored push members (17) each having opposing spherical surfaces (23, 24) at the front and rear sides; each surface is mating with corresponding spherical surfaces (23, 24) of corresponding push members (17) to allow a relative rotational movement between them; the push members (17) are threaded and aligned along a pulling cable (19) and slide inside a tubular guide sheath (21) along a transmission line. Both ends (22) of the tubular sheath (21) are connected to a respective guide plate (14, 16) having a guide groove for the push members (17) and sliders (13, 15) to which the pulling cable (19) is connected at both end of the transmission line.

## Description

### BACKGROUND OF THE INVENTION

The present invention relates to mechanical drive systems and more particularly is directed to a flexible drive device, of the push-pull type, capable of transmitting pushing and pulling forces of high value, between a linear or rotary actuator, such as a pneumatic or hydraulic cylinder or an electric motor, and a mechanical part or driven member, which in turn can be provided for a rotary or linear motion, irrespective of the type of actuator used.

The push-pull drive device according to the present invention can be applied in particular to remote drive systems, wherein a drive line for the transmission of power and movement can be differently oriented and developed in a plane or in the space, along any rectilinear, curved and/or circular path having any length and in any required direction.

### STATE OF THE ART

Flexible or articulated drive systems for the remote transmission of movements, are widely known and used in various mechanical fields, for example in automotive, shipping or in machine tools, or for other applications which require a remote power transmission between an actuator and a drive member, or device. In general these systems make use of articulated chains, cables and/or differently composed ropes, sliding in guide sheaths to transmit forces.

Flexible or articulated drive systems of the type mentioned above are prevalently capable of exerting pulling forces, even of a high value, the pushing action however being virtually nil or negligible due to the flexibility of the same system.

For example, with an usual flexible transmission comprising a metal cable sliding in a tubular sheath, although stiffened by spirally wound metal threads, the extent of the thrust or pushing force which can be exerted is in general extremely low, at most between 10 and 20% of the pulling force which can be exerted by the same cable. Moreover, in flexible transmissions of this type, the extent of the thrust is in any case conditioned, not only by the peak load acting on the cable, but also by the bending arc or curvature of the sheath and of the internal cable, whose radius of curvature in general must be of a considerably high value.

Therefore, with the articulated or flexible systems of the known type, it is not possible to obtain remote drives of the "push and pull" type, and which develop in a plane or in the space along any path of a transmission line, allowing at the same time push-pull forces of high value to be exerted, wholly independent one from the other and from the path and length of the same transmission line.

Another problem found in flexible drive systems of the known type consists in that the cable in general is not guided at both ends for the entire work stroke, and is therefore considerably fatigue stressed, due to bending in the connection to an actuator, and to a driven mechanical part, breaking after a number of actuations.

For these reasons it is currently necessary to use power transmissions of the rigid type, in which the actuator is directly connected in close proximity to the device or member to be actuated.

By placing for example a hydraulic or pneumatic cylinder near the same drive member in a machine tool, entails considerable problems of bulk, in particular if high power actuators have to be used, in that their dimensions are generally considerably larger than those of the member to be driven.

### OBJECTS OF THE INVENTION

The general object of the invention is to provide a flexible drive system, of the push-pull type, capable of avoiding the disadvantages found in flexible or articulated drive systems of the known type.

More particularly, an object of the present invention is to provide a flexible drive device of the push-pull type for power transmissions, by which it is possible to exert push and pull forces, and wherein the extents of the pushing forces are wholly independent one from the pulling ones.

A further object of the present invention is to provide a drive device, as referred to above, which can be used in particular for remote mechanical drives, in which the transmission line can have any development in length, in a plane and/or in the space, allowing pushing and/or pulling forces to be exerted along rectilinear, curved and/or circular paths without the radius of curvature or bending angle having a negative influence on the work stroke, and the extent of the thrust or pushing and pulling forces exerted.

Yet a further object of the present invention is to provide a flexible drive device by which it is possible to differentiate the value of the pushing force from that of the pulling force, by simply modifying the constructional features of the component parts and of the materials used.

Yet another object of the invention is to provide a highly versatile and reliable flexible drive device which at the same time is formed by few and extremely simple mechanical parts.

### BRIEF DESCRIPTION OF THE INVENTION

The above can be achieved by means of a push-pull drive device according to claim 1.

More precisely, according to the invention a push-pull drive device has been provided in which a flexible drive unit substantially comprises two coaxially arranged, elongated and constructionally separate drive elements, yet functionally integrated one with the other, that is to say comprising a first articulated thrust element provided by a plurality of push members each having opposing front and rear spherical surfaces matingly engaging with corresponding spherical surfaces of next push members to allow a relative rotational motion between them, and a second flexible pulling element comprising a cable or rope coaxially extending through said articulated thrust members, and in which the push members are maintained in contact one with the other by providing the same cable with adequate tightness which substantially prevents any relative axial movement between the thrust elements and the same pulling cable, except within the limits permitted by an adequate elastic tightening device at both ends of the cable, suitable for maintaining the entire length of the flexible push-pull drive device at a substantially constant value.

According to a further aspect of the invention, a flexible drive device, of the push-pull type has been provided, in which the pulling cable and the push members can be appropriately guided for the entire work stroke, in the connection points of the cable to an actuator or to a drive member or device, in this way allowing a particularly high number of working cycles to be obtained, considerably higher than the number of work cycles which can be obtained with flexible transmission systems of the known type. The above is obtained, for example, by allowing the articulated push members and the pulling cable to conjointly to slide along a flexible reaction sheath and a slot of a guide plate at each end of the sheath, for the entire work stroke. In this way it is possible to provide a connection member for the cable, having the same shape and dimensions of the articulated push-members so as to slide along the same guide plates.

According to another aspect of the present invention each articulated push member is provided with an axial bore for the passage of the pulling cable, which bore gradually widens in one direction, and which may have an internal arched profile with a radius of curvature wider than the spherical outer surfaces of the push member such as to prevent any interference between the articulated push members and the pulling cable in a condition of minimum curvature allowed for the same flexible drive device. In this way the flexible cable and the articulated push members of the drive device are prevented from stiffening at very tight bends, making sliding of the push-members inside the guide sheath very smooth.

### BRIEF DESCRIPTION OF THE DRAWINGS

These and further objects and features of the flexible drive device according to the invention, will be made clearer by the following description with reference to the examples of the accompanying drawings, in which:
- Fig. 1 is a top view of a push-pull drive device according to the invention, suitable for linear movements;
- Fig. 2 is an enlarged detail of the device of Figure 1 along a linear portion;
- Fig. 3 is an enlarged detail of the device of Figure 1 along a curved portion;
- Fig. 4 is an enlarged cross-sectional view along line 4-4 of Figure 1;
- Fig. 5 is an enlarged cross-sectional view along line 5-5 of Figure 1;
- Fig. 6 is an enlarged detail of the system for the connection of the cable to a slider, and to an actuator and/or to a mechanical drive member;
- Fig. 7 shows an enlarged cross-sectional view of a first embodiment of a push-member according to the invention;
- Fig. 8 shows an enlarged sectional view of some push-members according to a further embodiment;
- Fig. 9 shows an enlarged sectional view of some push-members according to a third embodiment;
- Fig. 10 shows an application of the flexible drive device connected to a rotary part.

### DETAILED DESCRIPTION OF THE INVENTION

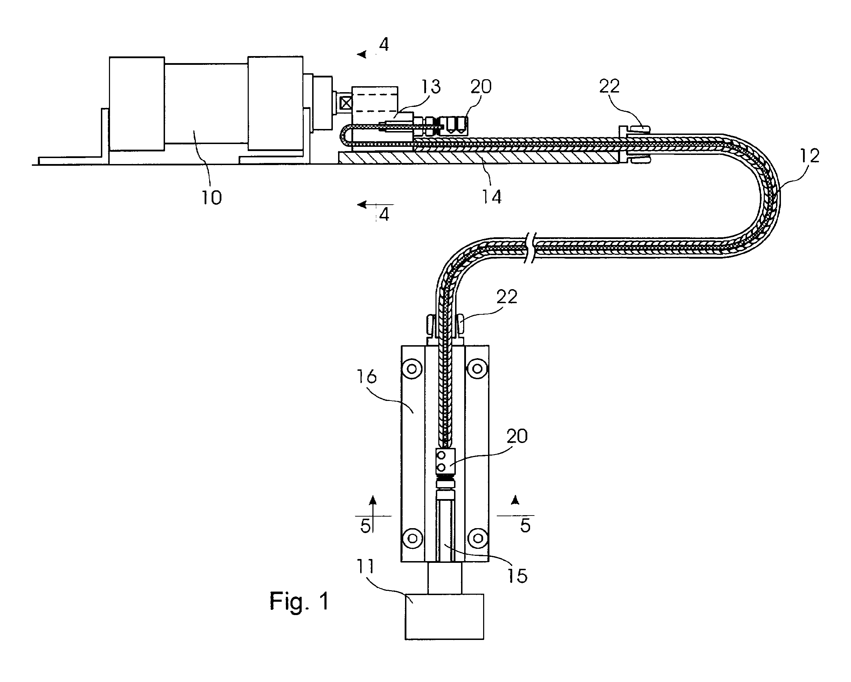

With reference to Figures 1 to 7 we will now describe a first embodiment of the flexible drive device according to the invention, and one of its possible applications.

Reference 10 in Figure 1 denotes a linear actuator, for example a pneumatic or hydraulic cylinder, connected to a drive member 11 by means of the push-pull flexible and articulated drive device according to the invention, defining a power transmission line denoted overall by reference 12.

More specifically, the rod of the cylinder 10 is connected to the flexible drive device 12 by means of a slider 13 moving along a guide plate 14 suitable for guiding the slider 13 and the same flexible drive device 12 at the final section of the transmission line and for the entire work stroke.

Similarly, at the other end of the transmission line, the flexible drive device 12 is connected to the drive member 11 by means of a second slider 15 moving along a guide plate 16 which extends again for the entire length of the work stroke.

As shown in the same Figure 1, the flexible drive device 12 can develop along any suitable path of a transmission line having rectilinear and/or curved portions, both in a plane and in the space, according to needs.

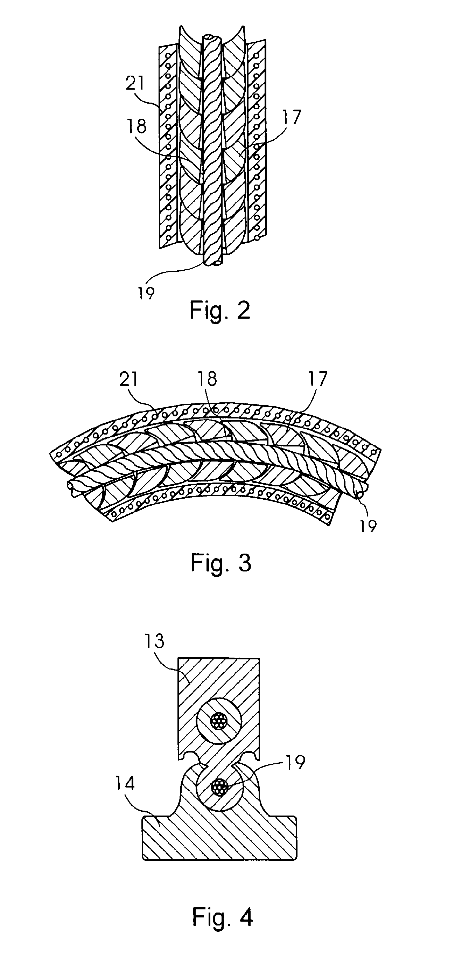

The basic features of the flexible drive device according to the invention, and a first preferred embodiment, will be now described in greater detail hereinbelow with reference to Figures 2, 3 and 7 of the accompanying drawings.

As shown in the aforesaid figures, and in the same Figure 1, the flexible drive device 12 is substantially provided by two coaxially arranged and structurally independent, yet functionally integrated drive elements. More specifically it comprises a first thrust element suitable for exerting a pushing action, and a second drive element suitable for exerting a pulling action in a wholly independent manner from the thrust action exerted by the other element of the drive device.

The thrust element of the flexible drive device comprises a plurality of articulated push members 17 each provided with front and rear spherical surfaces which are maintained in close contact and mating with a spherical surface of a next arranged push member 17 in order to allow any relative angular or rotational movement between the push members 17, both in the space and in any plane.

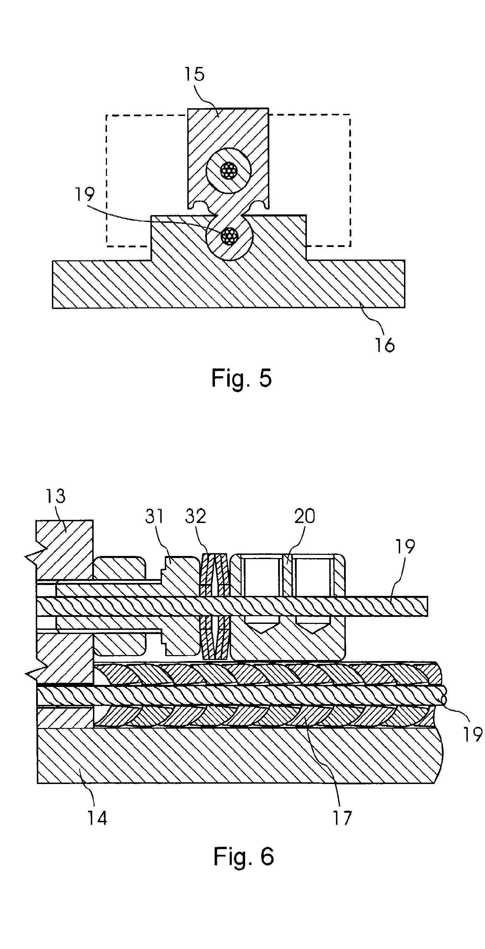

Each single push member 17 is provided with a central bore 18 for the passage of a pushing cable 19, provided for example by a metal cable, synthetic fibre rope or in any other suitable material or combination of materials, whose ends are connected to the slider 13 and to the slider 15 respectively by means of a clamp 20, as explained furhteron with reference to Figure 6.

The flexible drive 12 provided by the axially aligned push members 17 and the pulling cable 19, is appropriately tight by the clamps 20 in order to maintain the articulated push members 17 in close contact one with the other, inside a guide and reaction tubular sheath 21, whose ends are appropriately connected to the guide plates 14 and 16 for example by means of a cap 22 which can be screwed onto a threaded position at a respective end of the guide plate, or in another suitable manner.

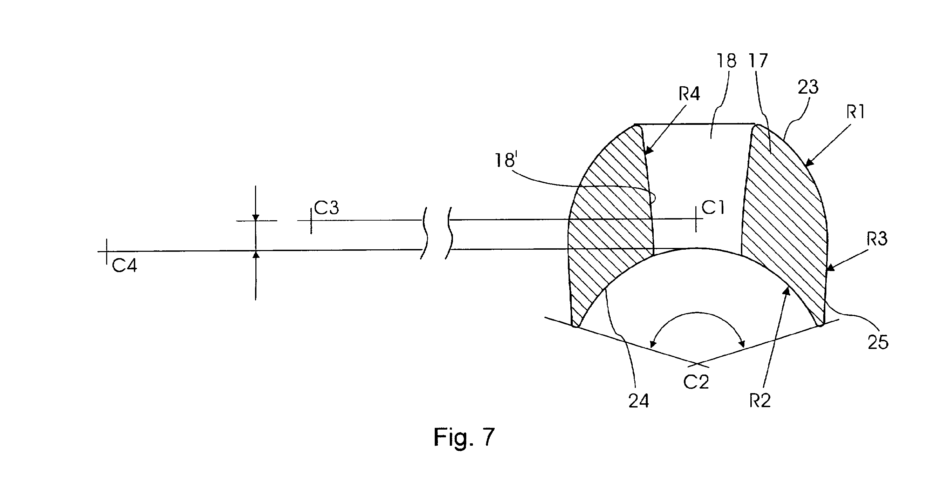

Figure 7 of the accompanying drawings shows a particular embodiment of a push member 17 forming part of the flexible drive device 12 according to the invention.

As shown in Figure 7 the push member 17, for example on the rear side in relation to the direction of the force to be exerted, indicated by an arrow in the same figure, has a convex or spherical rear surface 23 having a radius R1 and its centre C1 on the longitudinal axis of the bore 18 for passage of the pulling cable 19, inside the same member 17, near the spherical surface 24 or cavity formed on the front side of the push member 17, which is opposite the previous one.

Since the spherical surface 23 on one side of each push member 17 is intended to matingly engage the hollow spherical surface 24 at the opposite side of an adjacent push member 17, the spherical surface 24 also has a radius of curvature R2 corresponding to the radius of curvature R1 of the spherical surface 23, whose centre C2 lies again on the longitudinal axis of the bore 18, outside of the cavity 24, in such a position that the angle extending over the spherical surface 24 is less than 180°, that is to say less than the angle extending over the spherical surface 23.

The difference between the two angles extended by the spherical surfaces 23 and 24 which, by way of an example, can be between 30 and 40°, is in any case such as to allow a relative rotation between the push members, sufficient to create a very narrow radii of curvature of the flexible cable 19, up to 360° and over, in this way also providing possible spiral windings for the same flexible drive device.

The outer spherical surface 23 of each push member 17 is in turn joined to the internal spherical surface 24 by means of a third spherical surface 25 having a radius of curvature R3 which is considerably larger than that of the surfaces 23 and 24, for example 3 or 4 times grater, whose centre C3 is positioned on the plane at right angle to the longitudinal axis of the bore 18, passing through the centre of rotation C1 of the external spherical surface 23, or near the same.

Again from Figure 7, in order to avoid possible interference between the internal surface of the bore 18 and the cable 19, in particular in the condition of minimum radius of curvature of the flexible drive 12, the bore 18 for the pulling cable 19 has a converging shape, for example from the external spherical surface 23 towards the internal spherical surface 24, and an arched longitudinal profile 18' having a radius of curvature R4 which comparatively is even greater in relation to the radius of curvature R1, R2 of the surfaces 23 and 24, for example equal to the radius of curvature R3 of the joining surface 25, whose centre C4 lies again on a plane at right angle to the axis of the bore 18, parallel and underlying the plane containing the centre of curvature C3 of the internal profile of the bore 18, that is to say in a position at or near a plane tangent to the internal spherical surface 24.

This particular configuration of the push members 17 was designed, in addition to allowing a maximum articulation degree, also and above all to obtain a large contact surface between the adjacent push members 17, such as to exert thrust or pushing forces of a high value, maintaining the extent of the contact pressure at a comparatively low value.

This allows the single push members 17 to be made in any suitable material or combination of materials, for example in metal material, plastics or of other kind, guaranteeing in any case appropriately calculated thrust forces, which can selectively differ from the pulling forces, being lower, higher or equal one to the other. For example, for safety purposes, the flexible drive 12 could be designed to exert thrust forces equal to or even much higher than the pulling forces exerted by the internal cable, which to date had not been possible with the flexible or articulated drive systems of the known type.

Likewise the pulling force exerted by the internal cable 19 could be appropriately calculated to achieve a preset breakage value, for safety purposes or for another working requirement.

As previously specified with reference to the example of Figure 1, both ends of the cable 19 are attached to a respective sliders 13 and 15 for connection to an actuator 10, and respectively to a machine element 11 to be driven; the sliders 13 and 15 move along respective guide plates 14 and 16 which extend to supporting and guiding both ends of the same drive 12 along the transmission line for the entire work stroke.

In this respect, as shown in Figures 1, 4 and 5, and additionally in the enlarged detail of Figure 6, at each end of the flexible drive 12, the push members 17 and the sliders 13, 15 for connection to the actuator 10, and to the driven part 11 respectively, slide in a cylindrical groove opening at a narrow longitudinal slot which extends along the entire length of the guide plates 14 and 16 respectively. More specifically the cylindrical shape of each guide groove is such as to correspond to the external shape and dimension of the push members 17, which in this way are guided for the entire work stroke. In turn, each end of the pulling cable 19 is passing through a first lower hole of the slider 13 and 15, along a cylindrical bottom part moving along the groove of the guide plate 14 and 16, then the cable end U-bending backwards through an upper hole, in the same slider, to exit from the side wherein it was originally inserted.

The cable 19 is then locked by means of a clamp 20, disposing between the clamp 20 and the opposite end of the sliders 13, 15, an appropriate and adjustable tightening means comprising, for example, a hollow screw 31 threaded by the cable 19, and a set of Belleville washers or elastically yieldable members 32, to provide the cable 19 with a sufficient pre-tightening force for maintaining the several push members 17 with their mating spherical surfaces in close contact, even though allowing free relative rotational movements, and a slight sliding between the cable 19 and push members 17 suitable for compensation of the elongations resulting from internal stresses of the system and/or changes in temperature, while maintaining the length of the flexible drive 12 substantially unchanged.

In Figures 1 to 5 a particular embodiment of the flexible push-pull drive device 12 is shown, comprising a flexible internal cable 19 and a plurality of push members 17 identical one to the other, axially threaded on the cable 19, which are substantially in the form of hemispherical cups, that is to say provided with a convex spherical surface at one front side, and a concave spherical surface at the opposite rear side, both spherical surfaces having the same radius of curvature, and being joined by an outward intermediate spherical surface 25 having a radius of curvature greater than the radius of curvature of said front and rear sides.

In the example of figure 7 the push member 17 is shown in the form of a thick body; the solution of figure 7 is suitable for the manufacturing of the push members 17 by die-shaping or die-moulding according to the material used for the same members 17.

According to the invention it is also possible to manufacture push members 17 of reduced thickness, by punching and deep-drawing the same members 17 from a metal sheet of reduced thickness, for example about 1 to 3 mm; this solution allows for a more flexibility degree.

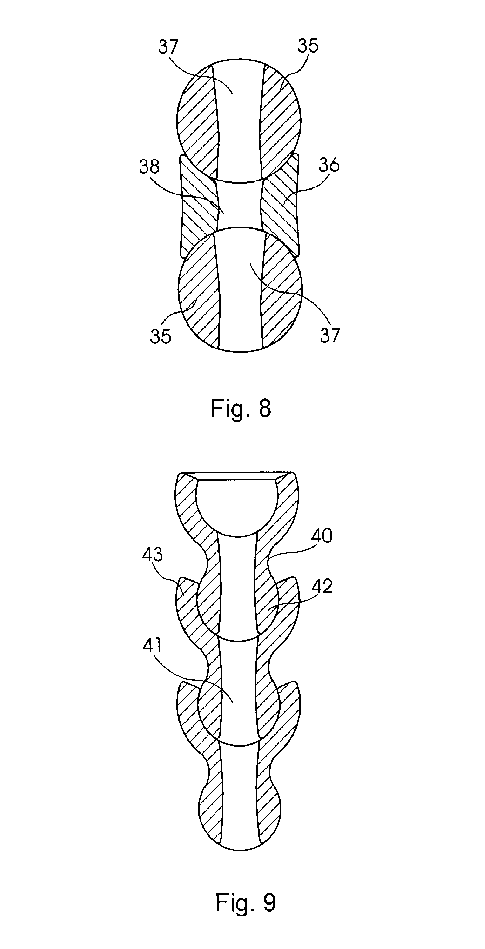

Figure 8 of the accompanying drawings shows a further possible embodiment of the invention. In the case of Figure 8 the flexible drive 12 substantially comprises two set of push members 35, 36 alternately arranged one in relation to the other. More specifically it comprises a first set of push members 35 having a spherical shape, and a second set of push members 36 having a substantially cylindrical shape, to form intermediate spacers between successive spherical members 35, as shown; the spacer members 36 are provided at both ends with concave spherical surfaces mating to the outer surfaces of the spherical push members 35, as in the previous case.

In a substantially similar manner to what has been previously referred to, now each push member 35 and spacer member 36 has an axial bore 37 and 38 for a pulling cable, not shown, said bores 37, 38 comprising again a peripheral surface having an arched profile.

Figure 9 of the drawings shows a third possible embodiment whereby the flexible drive 12 comprises a plurality of push members 40 wholly identical one to the other, provided with an axially extending through bore 41. However in this case each push member 40 comprises a spherical head 42, on one side, and a spherical cup-shaped portion 43, on the opposite side, to matingly engage a cup-shaped portion and respectively a spherical head of contiguous members 40. For the whole of the remaining part, the drive of Figure 9 is completed by an internal pulling cable and by an external guide sheath as in the case of Figures 1 and 8.

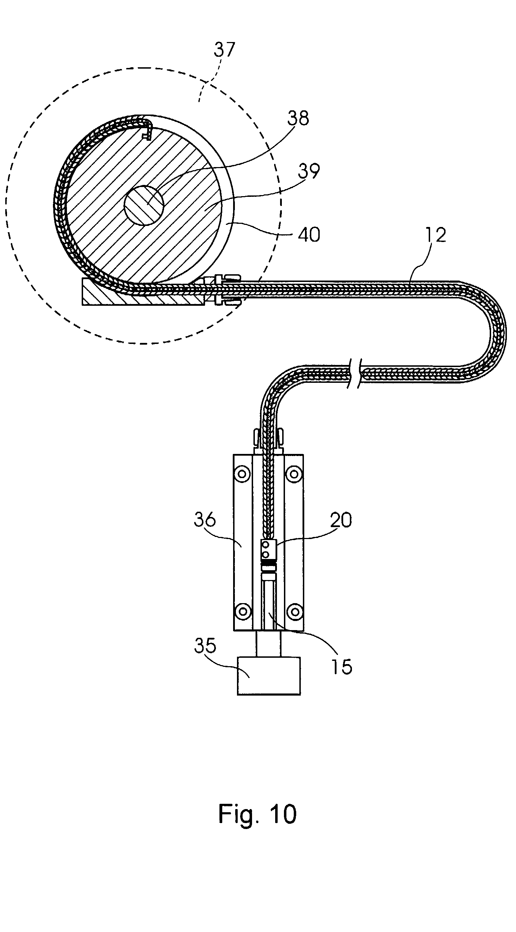

Figure 10 of the accompanying drawings shows another possible embodiment and use of the drive device 12 according to the invention, in which one end of the flexible drive 12 is connected to a linearly movable element 35 along a guide plate 36 as in the case of Figure 1, while the other end is connected to a rotary member 37 attached or supported by a shaft 38.

As regards the connection system of the flexible drive 12 to the linearly movable element 35, reference is made to what has been previously said with reference to the example of Figure 1. Conversely, as regards the connection to the rotary member 37, as shown in the same figure, the corresponding end of the flexible drive 12 is attached to a reel 39 connected to a rotating shaft 38. The reel 39 is provided with a peripheral groove 40, having a circular or helical shape, in which one or more turns of the flexible drive 12 are wound, according to the angular of rotation or the number of turns performed by the shaft 38.

It is therefore clear that, by means of the flexible drive device according to the present invention, it is possible to transmit from remote, the movement of an actuator to a driven part, arranged in any way in a plane or in the space, by transforming the linear movement of the actuator into a corresponding linear or rotational movement of the driven part, or vice versa, according to the constructional and functional features of the device itself and its requirements of use.

From what has been said and shown in the accompanying drawings it is therefore clear that a drive device of the "push and pull" type has been provided for connecting an actuator to a part to be driven, which uses a special flexible part for the transmission of movement, substantially formed by a towing cable extending inside a plurality of thrust elements jointed one to the other, which perform in a correlated manner differentiated functions of thrust and traction, totally freeing the system from the type and development of the transmission path, as well as from the required work stroke.

The intent in any case is that what has been said and shown with reference to the accompanying drawings has been given purely by way of an example of some embodiments and possible applications. Therefore other modifications or variants may be made in relation to what is shown, that is to say the same device may be used in other, different fields of application, without thereby departing from the present invention.

## Claims

1. A drive device of push-pull type, comprising coaxially arranged first and second elongated flexible drive elements (12) slidingly movable in a tubular sheath (21), which can be connected to an actuator (10) and respectively to a driven part (11), characterised in that said first and second elongated drive elements of the flexible drive comprise:
- a longitudinally extending pulling cable (19);
- a plurality of push members (17; 35, 36; 40), coaxially arranged along the pulling cable (19), each of the push members (17; 35, 36; 40) comprising front and rear spherical surfaces matingly fitting with corresponding spherical surfaces of adjacent push members (17; 35, 36; 40), on opposite sides;
- and tensioning means at both ends of the pulling cable (12), to keep the push members (17; 35, 36; 40) in a mated condition while allowing a relative rotational movement between the same push-members and the pulling cable (19) of the flexible drive device (12).

2. A drive device according to claim 1, characterised in that it comprises guide means (14, 16) for guiding the push members (17; 35, 36; 40) at each end, said guide means (14, 16) longitudinally extending for the entire work stroke of the drive device.

3. A drive device according to claim 2, characterised in that said guide means comprise a guide plate (14, 16) having a longitudinal groove, and a slider (13, 15) for the connection to the pulling cable (19), movable along said guide groove.

4. A drive device according to claim 2, characterised in that one end of the cable (19) is connected to a rotating reel (37), and in that the guide means for the push members (17; 35, 36; 40) comprise a guide groove (40) peripherally extending to said rotating reel (37).

5. A drive device according to claim 1, characterised in that the tensioning means for the pulling cable (19) comprise elastically yielding tightening means (32) .

6. A drive device according to claim 1, characterised in that said pulling cable (19) is connected to a rotating or linear actuator (10).

7. A drive device according to claim 1, characterised in that said pulling cable (19) is connected to a linearly movable or rotating drive member (11).

8. A drive device according to claim 1, characterised in that each push member (17; 35, 36; 40) is provided with a through bore (18) for the pulling cable, said bore (18) having an arched profile on the internal surface (18').

9. A drive device according to claim 8, characterised in that the axial bore (18) for the pulling cable (19) converges towards one of the front and rear spherical surfaces.

10. A drive device according to claim 1, characterised by comprising a plurality of identically shaped push members (40), each provided with a spherical head (42) on a side and a follow spherical surface (24) on the other side, both having a same radius of curvature (R1, R2).

11. A drive device according to claims 1 and 10, characterised in that an intermediate spherical surface (25) is provided between the two opposed front and rear spherical surfaces (23, 24) of each thrust element, said intermediate spherical surface having a radius of curvature greater than that of the front and rear spherical surfaces (23, 24).

12. A drive device according to claim 1, characterised by comprising a first set of push members (35) having a spherical shape, and a second set of intermediate spacer members (36) having follow spherical surfaces on both opposite sides mating with the spherical surfaces of the spherical shaped members (35) of the drive device.
